# EUROPEAN PATENT APPLICATION

(11) **EP 4 806 783 A1**
(43) Date of publication of application: **16.09.2026**
(21) Application number: 26165222.6
(22) Date of filing: 16.03.2026
(51) Int. Cl.: B64C 27/12, B64D 27/33, B64D 35/024

(54) **HYBRID HELICOPTER POWER PLANT**

(30) Priority: 14.03.2025 US 202519079760
(71) Applicant: Pratt & Whitney Canada Corp., Longueuil, Québec J4G 1A1 (CA)
(72) Inventor: DUROCHER, Eric S., (01BE5) Longueuil, J4G 1A1 (CA); LABRECQUE, Michel, (01BE5) Longueuil, J4G 1A1 (CA)
(74) Representative: Dehns

(57) **Abstract**

A compact hybrid helicopter power plant (12) includes a thermal engine (26) including a rotatable output shaft (46), a main gearbox (30) drivingly connecting the output shaft (46) of the thermal engine (26) to a main rotor (14) of a helicopter (10), and an electric machine (28) operable as a motor and as a generator drivingly connected to the output shaft (46) of the thermal engine (26). The main gearbox (30) has an input shaft drivingly connected to the output shaft (46) of the thermal engine (26) for common rotation with the output shaft (46) of the thermal engine (26). A rotor of the electric machine (28) is drivingly connected to the output shaft (46) of the thermal engine (26) for common rotation with the output shaft (46) of the thermal engine (26). The thermal engine (26) is disposed between the main gearbox (30) and the electric machine (28).

## Description

### TECHNICAL FIELD

The invention relates generally to helicopters, and more particularly to helicopter power plants.

### BACKGROUND

A helicopter power plant uses a main gearbox to distribute motive power from one or more gas turbine engines to a main rotor and to a tail rotor via respective mechanical power transmission systems. The main gearbox, gas turbine engine(s) and mechanical power transmission systems can be bulky and the nacelle must be sized accordingly. The size of the nacelle can affect the flow of air around the helicopter and impact the performance of the helicopter. Improvement is desirable.

### SUMMARY

According to one aspect of the present invention, there is provided a hybrid helicopter power plant including:
a thermal engine including a rotatable output shaft;
a main gearbox drivingly connecting the output shaft of the thermal engine to a main rotor of a helicopter, the main gearbox having an input shaft drivingly connected to the output shaft of the thermal engine for common rotation with the output shaft of the thermal engine; and
an electric machine operable as a motor and as a generator, a rotor of the electric machine being drivingly connected to the output shaft of the thermal engine for common rotation with the output shaft of the thermal engine, the thermal engine being disposed between the main gearbox and the electric machine.

Optionally, and in accordance with the above, the input shaft of the main gearbox may be drivingly connected to a first axial end of the output shaft of the thermal engine. The rotor of the electric machine may be drivingly connected to a second axial end of the output shaft of the thermal engine axially opposite the first axial end of the output shaft of the thermal engine.

Optionally, and in accordance with any the above, the input shaft of the main gearbox, the output shaft of the thermal engine, and the rotor of the electric machine may be coaxial.

Optionally, and in accordance with any the above, the hybrid helicopter power plant may include an electric anti-torque motor drivingly connected to an anti-torque air mover of the helicopter.

Optionally, and in accordance with any the above, the hybrid helicopter power plant may include one or more batteries. The electric machine may be operable as the generator to charge the one or more batteries. The electric machine may be operable as the motor using electric energy from the one or more batteries. The electric anti-torque motor may be operable using electric energy from the one or more batteries.

Optionally, and in accordance with any the above, the electric anti-torque motor may be a first electric anti-torque motor. The anti-torque air mover may be a first anti-torque air mover operable as a first forward thruster. The hybrid helicopter power plant may include a second anti-torque electric motor drivingly connected to a second anti-torque air mover of the hybrid helicopter power plant operable as a second forward thruster. The second electric anti-torque motor may be operable using electric energy from the one or more batteries. The first anti-torque air mover may be disposed to a first lateral side of a central axis of the helicopter. The second anti-torque air mover may be disposed to a second lateral side of the central axis of the helicopter opposite the first lateral side of the central axis of the helicopter.

Optionally, and in accordance with any the above, the thermal engine may be a sole thermal engine drivingly connected to the main gearbox.

Optionally, and in accordance with any the above, the thermal engine may be a gas turbine engine. The output shaft may be a turbine shaft having a turbine disk mounted thereto.

Optionally, and in accordance with any the above, the main gearbox may be disposed forward of the turbine disk and the electric machine may be disposed aft of the turbine disk relative to a central axis of the helicopter.

Embodiments may include combinations of the above features.

According to another aspect of the present invention, there is provided a helicopter including:
a main rotor;
an anti-torque rotor;
a gas turbine engine including a turbine shaft having a turbine disk mounted thereto;
a main gearbox drivingly connecting the turbine shaft of the gas turbine engine to the main rotor, the helicopter being devoid of a speed-reducing gear train drivingly connecting the turbine shaft to the main gearbox;
an electric machine operable as a motor and as a generator, the electric machine being drivingly connected to the turbine shaft, the turbine disk being disposed axially between the main gearbox and the electric machine; and
an electric anti-torque motor drivingly connected to the anti-torque rotor and operable using electric energy generated by the electric machine.

Optionally, and in accordance with the above, the helicopter may include one or more batteries. The electric machine may be operable as the generator to charge the one or more batteries. The electric machine may be operable as the motor using electric energy from the one or more batteries. The electric anti-torque motor may be operable using the electric energy from the one or more batteries.

Optionally, and in accordance with any the above, the gas turbine engine may be a first gas turbine engine. The helicopter may be devoid of a second gas turbine engine drivingly connectable to the main rotor.

Optionally, and in accordance with any the above, the main gearbox may be disposed forward of the turbine disk and the electric machine may be disposed aft of the turbine disk relative to a central axis of the helicopter. The turbine shaft, an input shaft of the main gearbox and a rotor of the electric machine may be coaxial.

Optionally, and in accordance with any the above, the anti-torque rotor may be operable as a forward thruster.

Embodiments may include combinations of the above features.

According to another aspect of the present invention, there is provided a method of operating a hybrid helicopter power plant including: a gas turbine engine; a main gearbox drivingly connecting the gas turbine engine to a main rotor of the helicopter; an electric machine drivingly connected to the gas turbine engine; and an electric motor drivingly connected to an anti-torque device of the helicopter. The method includes:
driving a rotatable turbine shaft of a gas turbine engine at a shaft speed;
driving, with a first axial end of the turbine shaft, an input shaft of the main gearbox at the shaft speed;
driving, with a second axial end of the turbine shaft axially opposite the first axial end of the turbine shaft, the electric machine at the shaft speed;
while the electric machine is driven at the shaft speed, operating the electric machine as a generator to generate electric energy; and
driving the electric motor drivingly connected to the anti-torque device using the electric energy that is generated by the electric machine.

Optionally, and in accordance with the above, the method may include using the electric energy generated by the electric machine to charge a battery onboard the helicopter.

Optionally, and in accordance with any the above, the method may include, after operating the electric machine as the generator: operating the electric machine as a motor using electric energy from the battery; and driving the main rotor of the helicopter with the electric machine via the turbine shaft and via the main gearbox.

Optionally, and in accordance with any the above, the turbine shaft may be disposed axially between the main gearbox and the electric machine.

Optionally, and in accordance with any the above, the method may include, while driving the electric motor drivingly connected to the anti-torque device, using the anti-torque device to generate forward thrust for the helicopter.

Optionally, and in accordance with any the above, the electric motor drivingly connected to the anti-torque device may be a first electric motor drivingly connected to a first anti-torque device. The method may include driving a second electric motor drivingly connected to a second anti-torque device using the electric energy that is generated by the electric machine.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a perspective schematic representation of an exemplary helicopter including a hybrid power plant as described herein;
FIG. 2 is a schematic axial cross-section view through part of the helicopter of FIG. 1 showing the hybrid power plant;
FIG. 3 is a schematic axial cross-section view through part of another exemplary hybrid power plant suitable for installation in the helicopter of FIG. 1;
FIG. 4 is a schematic top view of another exemplary hybrid helicopter power plant; and
FIG. 5 is a flow diagram of a method of operating a hybrid helicopter power plant.

### DETAILED DESCRIPTION

This invention describes hybrid helicopter power plants and methods of operating such hybrid helicopter power plants. In various embodiments, the hybrid helicopter power plants described herein may have a relatively compact architecture compared to some existing helicopter power plants. In some embodiments, the compact architecture of the power plants may provide more efficient packaging inside of a nacelle of the helicopter thereby allowing for a shorter (i.e., less tall) and/or narrower nacelle that may have reduced drag during a cruise condition of the helicopter. A vertically shorter nacelle may also provide a more desirable vertical clearance between blades of a main rotor and the nacelle to promote a lift-generating performance of the main rotor. In various embodiments, the architecture of the hybrid power plants may also allow for a center of gravity of a thermal engine of a hybrid power plant to be lower toward the engine bay floor and also closer to the rotation axis of the main rotor of the helicopter.

Aspects of various embodiments are described through reference to the drawings. The term "connected" may include both direct connection (in which two elements that are coupled to each other contact each other) and indirect connection (in which at least one additional element is located between the two elements) unless the context clearly indicates otherwise. As used herein, the singular forms "a," "an," and "the" are intended to include the plural forms as well, unless the context clearly indicates otherwise.

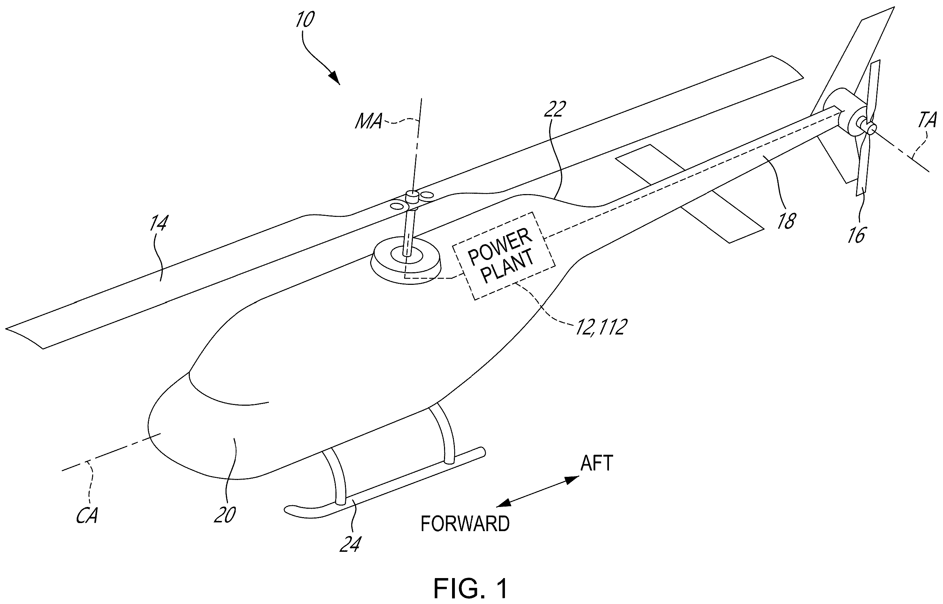

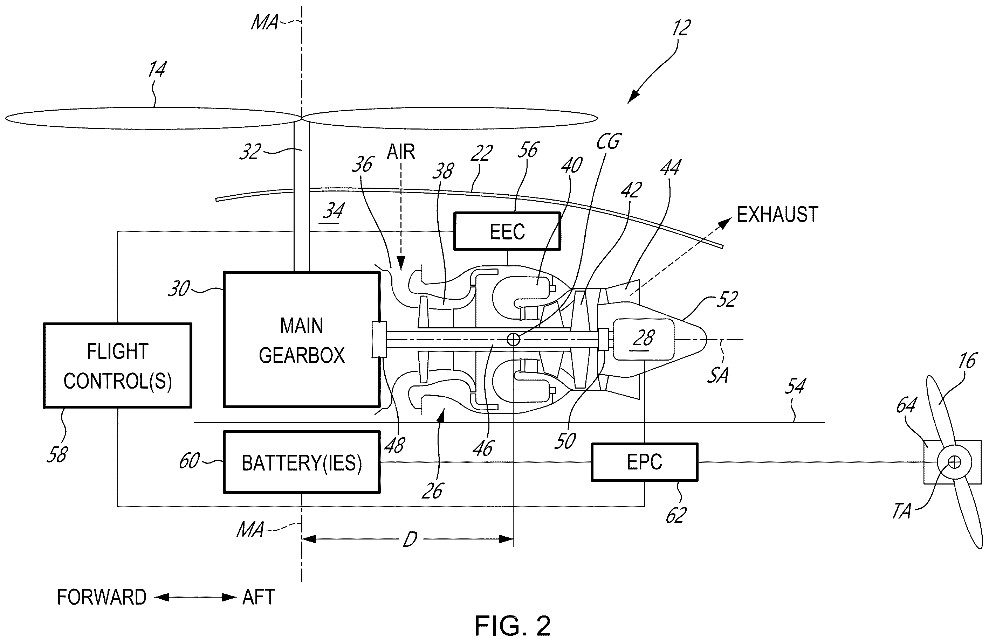

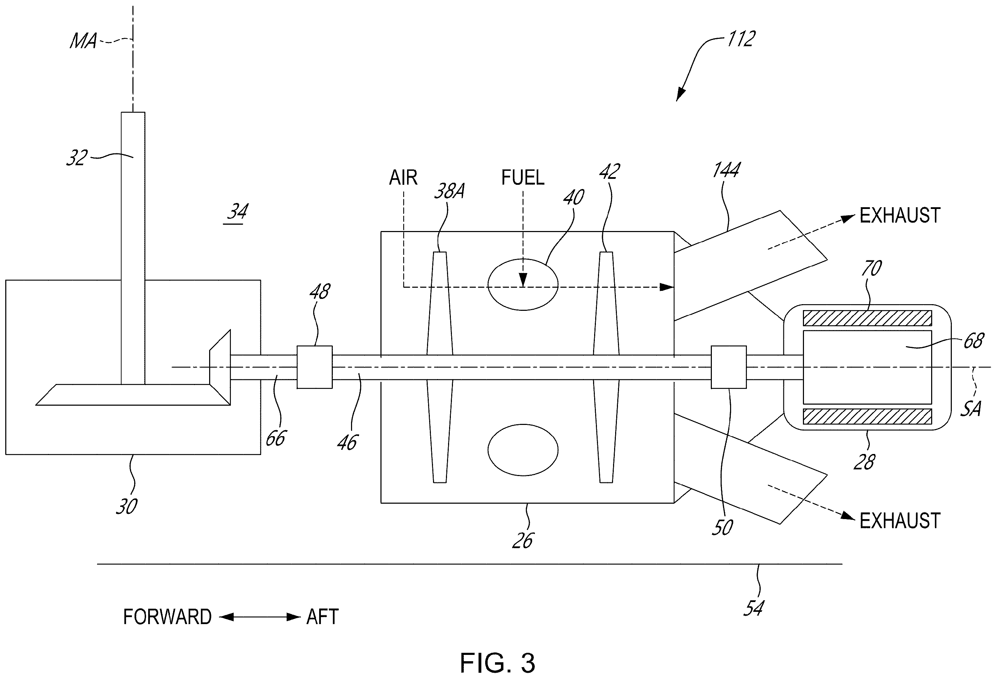

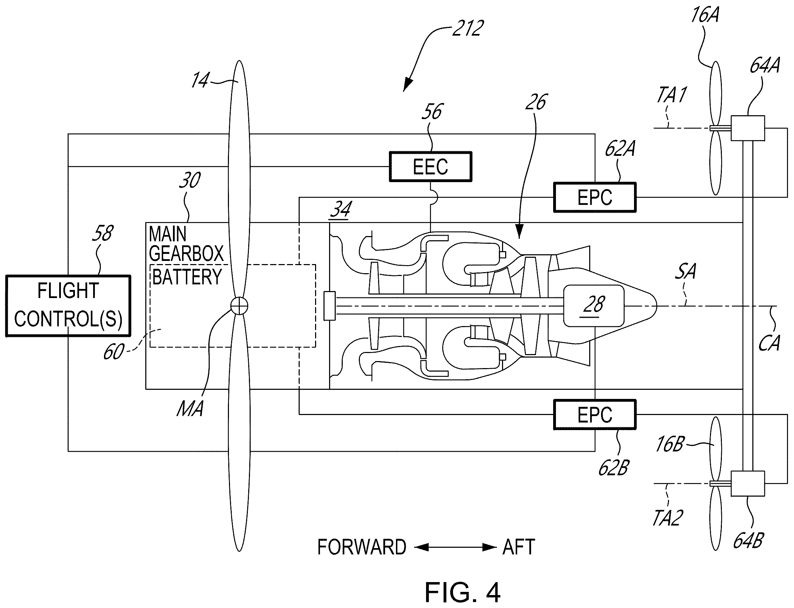

FIG. 1 is a perspective schematic representation of an exemplary helicopter 10 including hybrid power plant 12 (referred hereinafter as "power plant 12") as described herein. The specific configuration of helicopter 10 illustrated in FIG. 1 is intended to be a non-limiting example. It is understood that power plants 12, 112 (shown in FIGS. 2 and 3) and 212 (shown in FIG. 4) may be incorporated into helicopters having other configurations, and also into various configurations of rotorcraft. Helicopter 10 may be a type of rotorcraft in which lift and thrust are supplied by one or more horizontally spinning rotors such as main rotor 14 for example. In some embodiments, helicopter 10 may be capable of vertical take-off and landing, of hovering, and of flying forward, backward and laterally. The forward and aft directions of helicopter 10 are labeled in FIG. 1. In some embodiments, helicopter 10 may have a single (i.e., sole) main rotor 14 accompanied by one or more anti-torque devices (e.g., air movers) such as a vertically spinning anti-torque tail rotor 16 for example. As illustrated in FIG. 1, helicopter 10 may be a unicopter.

Main rotor 14 may be an air mover including a plurality of blades and be rotatable about main rotor axis MA, which may be substantially vertical relative to an upright orientation of helicopter 10. The pitch of the blades of main rotor 14 may be collectively adjustable via a collective pitch system including a control device located in a cockpit of helicopter 10.

Tail rotor 16 may counter the torque created by main rotor 14 due to the aerodynamic drag of main rotor 14 during operation. Tail rotor 16 may produce thrust in a lateral direction. Tail rotor 16 may be disposed at or near an aft end of tail boom 18 and push or pull laterally against tail boom 18 to counter the torque effect caused by the rotation of main rotor 14. Tail rotor 16 may be an air mover including a plurality of blades and be rotatable about tail rotor axis TA, which may be substantially horizontal relative to the upright orientation of helicopter 10. Tail rotor axis TA may be transverse to main rotor axis MA. By varying the pitch of the blades of tail rotor 16, the flight crew may control the yaw movement of helicopter 10. Tail rotor 16 may be a shrouded fan or an unshrouded propeller. In various embodiments, helicopter 10 may include one, two or more tail rotors 16.

Helicopter 10 may include fuselage 20 that may be configured to hold a flight crew, one or more passengers and/or cargo. For example, fuselage 20 may hold a passenger cabin and a cockpit or flight deck which may be used by the flight crew (i.e., pilot(s)) to control helicopter 10. Fuselage 20 may have a central (i.e., longitudinal) axis CA that is generally parallel to the forward-aft direction and that lies in a vertical plane that bisects fuselage 20 in two lateral halves. In various embodiments, helicopter 10 may be a manned or unmanned aircraft (e.g., drone).

Some or all of power plant 12, 112 may be housed inside nacelle 22. Part of power plant 12, 112 may be located in an engine bay in an upper portion of helicopter 10. Nacelle 22 may be located mainly behind main rotor axis MA and below main rotor 14 to provide a vertical clearance between nacelle 22 and the blades of main rotor 14. The vertical clearance may be selected to be sufficient to prevent or limit a negative influence on the lift-generating performance of main rotor 14. In some embodiments, the compact power plant architectures described herein may permit the selection of a desirable vertical clearance between nacelle 22 and main rotor 14 while also reducing the amount of space that is occupied by power plant 12, 112 onboard of helicopter 10.

FIG. 2 is a schematic axial cross-section view through part of helicopter 10 including power plant 12 shown schematically. Power plant 12 may have a hybrid configuration where two power sources may be used separately or together to propel helicopter 10. For example, power plant 12 may include thermal engine 26 and electric machine 28 that may be used to drive main rotor 14 via main gearbox 30 and mast 32. Power plant 12 may be disposed inside engine bay 34 and be at least partially housed by nacelle 22, which is partially shown in FIG. 2.

Thermal engine 26 may be a combustion engine that generates motive power from the combustion of a suitable fuel. In some embodiments, thermal engine 26 may include an intermittent combustion engine such as a piston engine or a Wankel engine for example. In some embodiments, thermal engine 26 may include a continuous combustion engine such as a gas turbine engine for example. FIG. 2 shows an axial cross-section through thermal engine 26. Thermal engine 26 may be a turboshaft gas turbine engine as illustrated in FIG. 2. Thermal engine 26 may include, in serial flow communication, air inlet 36 through which ambient air from outside of helicopter 10 is received, multistage compressor 38 for pressurizing the air, combustor 40 in which the compressed air is mixed with fuel and ignited for generating an annular stream of hot combustion gas, a turbine section including one or more turbine disks 42 for extracting energy from the combustion gas, and exhaust duct 44 for conveying the exhaust gas out of nacelle 22.

In various embodiments, thermal engine 26 may be a single-spool gas turbine engine or a multi-spool gas turbine engine. For example, thermal engine 26 may be a dual-spool gas turbine engine including a high-pressure spool including a high-pressure compressor stage and a high-pressure turbine stage mounted to a high-pressure shaft. Thermal engine 26 may include a low-pressure spool that is coaxial with and separately rotatable from the high-pressure spool. The low-pressure spool may include a low-pressure compressor stage and one or more turbine disks that are mounted to a low-pressure shaft. The low-pressure shaft may extend through the high-pressure shaft. The low pressure shaft and the high-pressure shaft may be rotatable in opposite directions during operation of thermal engine 26.

In the exemplary embodiment illustrated in FIG. 2, the low-pressure shaft is referred herein as "turbine shaft 46" and may be used as a rotatable output shaft of thermal engine 26 that drives one or more loads connected to thermal engine 26. Turbine shaft 46 may have turbine disk 42 and optionally one or more stages 38A (shown in FIG. 3) of multi-stage compressor 38 mounted thereto. **In** other words, turbine disk 42 may be fixedly mounted for common rotation with and be coaxial with turbine shaft 46. Turbine disk 42 may drive the rotation of turbine shaft 46 during operation of thermal engine 26. Turbine shaft 46 and turbine disk 42 may rotate together about shaft axis SA. Turbine shaft 46 may be drivingly connected to main gearbox 30 via forward coupling 48. Main gearbox 30 may include a suitable gear train that transfers motive power from turbine shaft 46 to main rotor 14.

Electric machine 28 may be operable as a motor and as a generator. Electric machine 28 may be drivingly connected to turbine shaft 46 via aft coupling 50. Electric machine 28 may be disposed radially inwardly of exhaust duct 44. In some embodiments, electric machine 28 may be mounted to a suitable structure (e.g., casing) of thermal engine 26 and may be disposed inside tail cone 52. Electric machine 28 may be mounted radially inwardly of exhaust duct 44. Electric machine 28 may axially overlap exhaust duct 44 relative to shaft axis SA.

In some embodiments, helicopter 10 may be a single-engine helicopter where thermal engine 26 is the sole thermal engine of helicopter 10. Thermal engine 26 may be the sole thermal engine that is drivingly connectable to main rotor 14. Helicopter 10 may be devoid of another thermal engine drivingly connectable to main rotor 14. For example, helicopter 10 may be devoid of a second gas turbine engine drivingly connectable to main rotor 14.

Thermal engine 26 may be disposed between main gear box 30 and electric machine 28. For example, main gearbox 30 may be disposed forward of thermal engine 26, and electric machine 28 may be disposed aft of thermal engine 26. Main gearbox 30 may be drivingly connected to a forward axial end of turbine shaft 46, and electric machine 28 may be drivingly connected to an axially opposite aft axial end of turbine shaft 46. Turbine disk 42 may be disposed axially between main gearbox 30 and electric machine 28. Main gearbox 30 may be disposed forward of turbine disk 42 and electric machine 28 may be disposed aft of turbine disk 42 relative to central axis CA of helicopter 10.

Forward coupling 48 may include a suitable torque-transmitting connection such as a splined connection, a keyed connection and/or a flanged connection between the forward end of turbine shaft 46 and an input shaft of main gearbox 30. In some embodiments, turbine shaft 46 and the input shaft of main gearbox 30 may be coaxial and both rotate about shaft axis SA. Aft coupling 50 may include a suitable torque-transmitting connection such as a splined connection, a keyed connection and/or a flanged connection between the aft end of turbine shaft 46 and a rotor of electric machine. The aft end of turbine shaft 46 may directly drive electric machine 28 via aft coupling 50. In some embodiments, turbine shaft 46 and the rotor of electric machine 28 may be coaxial and both rotate about shaft axis SA. **In** some embodiments, the input shaft of main gearbox 30, turbine shaft 46 and the rotor of electric machine 28 may be coaxial and all rotate about shaft axis SA. **In** other words, the input shaft of main gearbox 30 may be directly connected to the forward end of turbine shaft 46, and the rotor of electric machine 28 may be directly connected to the aft end of turbine shaft 46.

The direct connections between turbine shaft 46 and main gearbox 30, and between turbine shaft 46 and electric machine 28 may be devoid of (e.g., speed-changing) gear trains. For example, helicopter 10 and power plant 12 may be devoid of a speed-reducing gear train drivingly connecting turbine shaft 46 to main gearbox 30. Accordingly, the forward end of turbine shaft 46 may directly drive main gearbox 30 via forward coupling 48. Any speed reduction between turbine shaft 46 and main rotor 14 may be accommodated by a suitable gear ratio of main gearbox 30. The absence of a speed-reducing gear train disposed between main gearbox 30 and turbine shaft 46 may reduce the overall axial length of power plant 12 and also allow the center of gravity CG of thermal engine 26 to be closer to main rotor axis MA as indicated by distance D. In some embodiments, having center of gravity CG of thermal engine 26 closer to main rotor axis MA may improve the operability of helicopter 10.

The absence of a speed-reducing gear train disposed between main gearbox 30 and turbine shaft 46 may also or instead reduce the overall height of power plant 12 by not including a vertical offset that is inherent to some speed-reduction gear trains. The lack of the separate speed-reducing gear train may allow thermal engine 26 to be disposed at a lower position relative to main gearbox 30 and hence be disposed closer to floor 54 of engine bay 34. The reduced overall height of power plant 12 may also allow for a reduced height of nacelle 22.

Power plant 12 may include a suitable controller such as electronic engine controller 56 (referred hereinafter as "EEC 56") and related accessories that control at least some aspects of performance of thermal engine 26. EEC 56 may be configured to make decisions regarding the control of thermal engine 26 based feedback from various sensors and on command(s) (e.g., power demand) received via flight control(s) 58 actuatable by the flight crew and located in the cockpit of helicopter 10 for example. Flight control(s) 58 may be used to achieve and maintain controlled flight of helicopter 10. Flight control(s) 58 may include a cyclic stick, a collective lever, a throttle and anti-torque pedals for example. EEC 56 may be configured to provide optimum engine efficiency for a given flight condition. EEC 56 may include one or more microcontrollers or other suitably programmed or programmable logic circuits operatively connected to thermal engine 26.

Power plant 12 may include one or more rechargeable batteries 60 (referred hereinafter in the singular) for storing electric energy onboard helicopter 10. Power plant 12 may include a suitable battery management system overseeing the operation of battery 60. Battery 60 may be disposed below floor 54 of engine bay 34 in some embodiments. Battery 60 may be electrically connected to electric machine 28 via one or more suitable electronic power controllers 62 (referred hereinafter in the singular as "EPC 62") that controls the flow of electric power between battery 60 and electric machine 28 via a suitable power inverter and other switch(es) for example. **In** one or more modes of operation including the operation of thermal engine 26, electric machine 28 may be operated as an electric generator and be driven by turbine shaft 46. Electric power generated by electric machine 28 may be used to charge battery 60. **In** some emergency situations, auto-rotation of main rotor 14 may be used to generate electric power using electric machine 28 and this electric power may be used to drive electric motor 64 and drive tail rotor 16.

In one or more other modes of operation, electric machine 28 may be operated as a motor and input motive power into turbine shaft 46 and into main rotor 14 via main gearbox 30. Electric energy stored in battery 60 may be used (e.g., via EPC 62) to operate electric machine 28 as a motor. In some embodiments, thermal engine 26 may be used as the main power source for driving main rotor 14. Depending on a power demand, electric machine 28 may be operated as a motor in conjunction with thermal engine 26 during a transient operating condition to supplement thermal engine 26 to provide relatively fast response time for example.

In some situations, electric machine 28 may serve as a back-up and be operated as a motor to drive main rotor 14 while thermal engine 26 is inoperative for example. In other words, electric motor 28 may be used as the sole source of motive power that is driving main rotor 14 in some situations. For example, electric machine 28 may be used as an emergency power unit to mitigate scenarios where thermal engine 26 may become unavailable, and facilitate an emergency landing for example.

Power plant 12 may include electric motor 64 drivingly connected to anti-torque tail rotor 16. Electric motor 64 may be used to drive tail rotor 16 based on flight crew input(s) received via flight control(s) 58. Electric motor 64 may be operable using electric energy generated by electric machine 28 (e.g., via EPC 62). For example, electric motor 64 may be operable using electric energy stored in battery 60 (e.g., via EPC 62). Using electric energy to drive tail rotor 16 may eliminate the need for some mechanical power transmission components (e.g., shaft(s), bearings, supports) between main gearbox 30 and tail rotor 16. The elimination of such mechanical power transmission components may free-up space between engine floor 54 of engine bay 34 and thermal engine 26 and provide an opportunity to bring thermal engine 26 closer to floor 54 and reduce the size of nacelle 22.

FIG. 3 is a schematic representation of part of another exemplary hybrid power plant 112 that may be disposed inside engine bay 34 of helicopter 10. Power plant 112 may include elements of power plant 12 and like elements are identified using like reference numerals. The description of common elements below may apply to power plant 12 as well. Power plant 112 may include elements such as EEC 56, battery 60, EPC 62, electric motor and tail rotor 16 that are not shown in FIG. 3 for the sake of clarity. FIG. 3 shows an axial cross-section through thermal engine 26.

In contrast with power plant 12, power plant 112 may include exhaust duct 144 having a different configuration than exhaust duct 44 of power plant 12. Electric machine 28 may be mounted (e.g., fastened) to exhaust duct 144, which may in turn be mounted to a casing of thermal engine 26. In some embodiments, exhaust duct 144 may have a configuration as those described in US Patent No. 12,246,844 (Title: HYBRID AIRCRAFT POWER PLANT).

In some embodiments, turbine shaft 46, input shaft 66 of main gearbox 30 and rotor 68 of electric machine 28 may be coaxial and commonly rotatable (e.g., together and at the same rotational speed) about shaft axis SA. Electric machine 28 may include rotor 68 magnetically coupled to stator 70. Input shaft 66 of main gearbox 30 may be drivingly connected to the forward axial end of turbine shaft 46 of thermal engine 26 (e.g., via forward coupling 48). Rotor 68 of electric machine 68 may be drivingly connected to the aft axial end of turbine shaft 46 of thermal engine 26 axially opposite the forward axial end of turbine shaft 46 of thermal engine 26.

In various embodiments, main gearbox 30 may include a bevel (or other type) of gear set to transfer torque from turbine shaft 46 to main rotor 14. In some embodiments, main gearbox 30 may include a suitable spiral-bevel gear set. The bevel gear set of main gearbox 30 may provide a speed reduction between the rotational speed of input shaft 66 and the rotational speed of main rotor 14.

FIG. 4 is a schematic top view representation of another exemplary hybrid power plant 212 for a helicopter having two anti-torque tail rotors 16A, 16B (i.e., air movers) mounted to suitable airframe structure. Power plant 212 may include elements of power plants 12, 112 and like elements are identified using like reference numerals. FIG. 4 shows an axial cross-section through thermal engine 26. First tail rotor 16A may be disposed to a first lateral side (e.g., starboard side) of central axis CA of the helicopter and be rotatable about first tail rotor axis TA1, which may be generally parallel to central axis CA and laterally offset from central axis CA. Second tail rotor 16B may be disposed to a second lateral side (e.g., port side) of central axis CA of the helicopter (i.e., opposite the first lateral side) and be rotatable about second tail rotor axis TA2, which may be generally parallel to central axis CA and laterally offset from central axis CA. First tail rotor 16A and second tail rotor 16B may be disposed aft of main rotor axis MA.

First tail rotor 16A may be driven by first electric motor 64A. Second tail rotor 16B may be driven by second electric motor 64B. First electric motor 64A and second electric motor 64B may be electrically connected to battery 60 via respective EPCs 62A, 62B. First electric motor 64A and second electric motor 64B may be powered with electric energy generated by electric machine 28. First electric motor 64A and second electric motor 64B may be powered with electric energy stored in battery 60.

Due to the orientations of first tail rotor axis TA1 and of second tail rotor axis TA2, first tail rotor 16A and second tail rotor 16B may be operable as forward and/or backward thrusters that provide forward and/or backward thrust for the helicopter. For example, first tail rotor 16A and second tail rotor 16B may be operated as forward thrusters to increase the forward speed of the helicopter. First tail rotor 16A and second tail rotor 16B may also be operated differentially to provide anti-torque function as well. For example, different magnitudes of thrust generated by first tail rotor 16A and second tail rotor 16B may be used to provide an anti-torque function and/or a yawing motion of the helicopter.

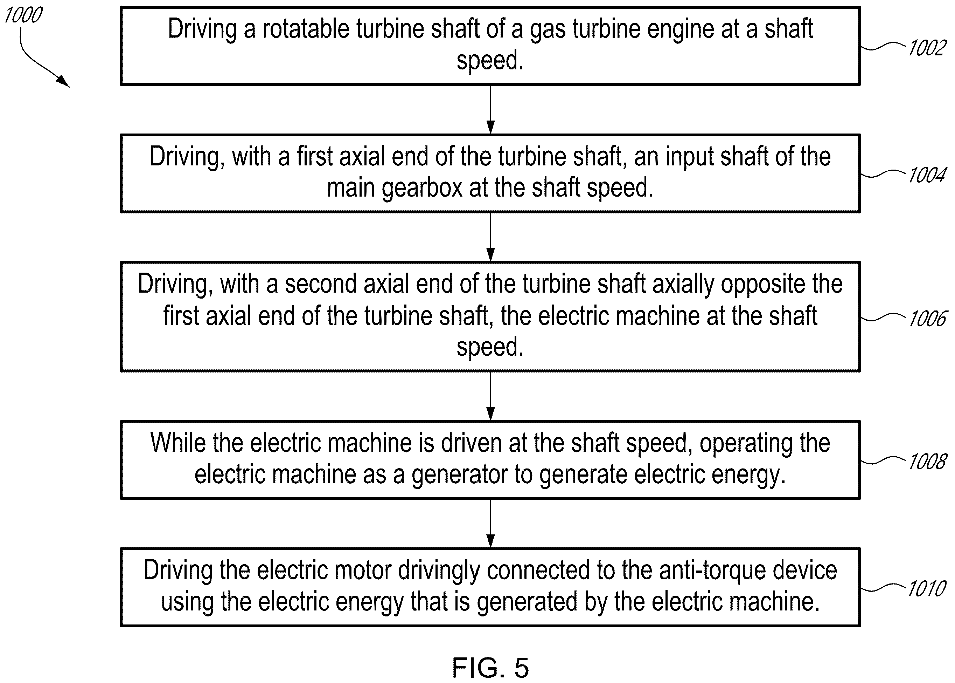

FIG. 5 is a flow diagram of a method of operating a hybrid helicopter power plant. Method 1000 may be performed using any one of power plants 12, 112 and 212, or using another suitable hybrid helicopter power plant. Method 1000 may include aspects of power plants 12, 112 and 212 and/or other actions disclosed herein. For example, method 1000 may be performed using a hybrid helicopter power plant including: a gas turbine engine or other thermal engine 26; main gearbox 30 drivingly connecting the gas turbine engine to main rotor 14; electric machine 28 drivingly connected to the gas turbine engine; and electric motor 64 drivingly connected to an anti-torque device such as tail rotor 16. In various embodiments, method 1000 may include:
driving a rotatable turbine shaft 46 of a gas turbine engine at a shaft speed (block 1002);
driving, with a first axial end of turbine shaft 46, input shaft 66 of main gearbox 30 at the shaft speed (block 1004);
driving, with a second axial end of turbine shaft 46 axially opposite the first axial end of turbine shaft 46, electric machine 28 at the shaft speed (block 1006);
while electric machine 28 is driven at the shaft speed, operating electric machine 28 as a generator to generate electric energy (block 1008); and
driving electric motor 64 drivingly connected to the anti-torque device using the electric energy that is generated by electric machine 28 (block 1010).

In some embodiments, method 1000 may include using the electric energy generated by the electric machine to charge battery 60 onboard helicopter 10. Electric motor 64 may be driven using electric energy stored in battery 60.

In some embodiments, method 1000 may include, after operating electric machine 28 as the generator: operating electric machine 28 as a motor using electric energy from battery 60; and driving main rotor 14 of helicopter 10 with electric machine 28 via turbine shaft 46 and via main gearbox 30.

In some embodiments, turbine shaft 46 may be disposed axially between main gearbox 30 and electric machine 28.

In some embodiments, method 1000 may include, while driving electric motor 64 drivingly connected to the anti-torque device, using the anti-torque device to generate forward thrust for the helicopter.

In some embodiments, electric motor 64 drivingly connected to the anti-torque device may be a first electric motor 64A drivingly connected to a first anti-torque device. Method 1000 may include driving a second electric motor 64B drivingly connected to a second anti-torque device using the electric energy that is generated by electric machine 28.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A hybrid helicopter power plant comprising:
a thermal engine including a rotatable output shaft;
a main gearbox drivingly connecting the output shaft of the thermal engine to a main rotor of a helicopter, the main gearbox having an input shaft drivingly connected to the output shaft of the thermal engine for common rotation with the output shaft of the thermal engine; and
an electric machine operable as a motor and as a generator, a rotor of the electric machine being drivingly connected to the output shaft of the thermal engine for common rotation with the output shaft of the thermal engine, the thermal engine being disposed between the main gearbox and the electric machine.

2. The hybrid helicopter power plant of claim 1, wherein:
the input shaft of the main gearbox is drivingly connected to a first axial end of the output shaft of the thermal engine; and
the rotor of the electric machine is drivingly connected to a second axial end of the output shaft of the thermal engine axially opposite the first axial end of the output shaft of the thermal engine.

3. The hybrid helicopter power plant of claim 1 or 2, wherein the input shaft of the main gearbox, the output shaft of the thermal engine, and the rotor of the electric machine are coaxial.

4. The hybrid helicopter power plant of any preceding claim, comprising an electric anti-torque motor drivingly connected to an anti-torque air mover of a helicopter.

5. The hybrid helicopter power plant of claim 4, comprising one or more batteries, wherein:
the electric machine is operable as the generator to charge the one or more batteries;
the electric machine is operable as the motor using electric energy from the one or more batteries; and
the electric anti-torque motor is operable using electric energy from the one or more batteries.

6. The hybrid helicopter power plant of claim 5, wherein:
the electric anti-torque motor is a first electric anti-torque motor;
the anti-torque air mover is a first anti-torque air mover operable as a first forward thruster;
the hybrid helicopter power plant includes a second anti-torque electric motor drivingly connected to a second anti-torque air mover of the hybrid helicopter power plant operable as a second forward thruster;
the second electric anti-torque motor is operable using electric energy from the one or more batteries;
the first anti-torque air mover is disposed to a first lateral side of a central axis of the helicopter; and
the second anti-torque air mover is disposed to a second lateral side of the central axis of the helicopter opposite the first lateral side of the central axis of the helicopter.

7. The hybrid helicopter power plant of any preceding claim, wherein the thermal engine is a sole thermal engine drivingly connected to the main gearbox.

8. The hybrid helicopter power plant of any preceding claim, wherein:
the thermal engine is a gas turbine engine; and
the output shaft is a turbine shaft having a turbine disk mounted thereto, optionally wherein the main gearbox is disposed forward of the turbine disk and the electric machine is disposed aft of the turbine disk relative to a central axis of the helicopter.

9. A helicopter comprising:
a main rotor;
an anti-torque rotor;
a gas turbine engine including a turbine shaft having a turbine disk mounted thereto;
a main gearbox drivingly connecting the turbine shaft of the gas turbine engine to the main rotor, the helicopter being devoid of a speed-reducing gear train drivingly connecting the turbine shaft to the main gearbox;
an electric machine operable as a motor and as a generator, the electric machine being drivingly connected to the turbine shaft, the turbine disk being disposed axially between the main gearbox and the electric machine; and
an electric anti-torque motor drivingly connected to the anti-torque rotor and operable using electric energy generated by the electric machine.

10. The helicopter of claim 9, comprising one or more batteries, wherein:
the electric machine is operable as the generator to charge the one or more batteries;
the electric machine is operable as the motor using electric energy from the one or more batteries; and
the electric anti-torque motor is operable using the electric energy from the one or more batteries; and/or
the gas turbine engine is a first gas turbine engine; and
the helicopter is devoid of a second gas turbine engine drivingly connectable to the main rotor.

11. The helicopter of claim 9 or 10, wherein:
the main gearbox is disposed forward of the turbine disk and the electric machine is disposed aft of the turbine disk relative to a central axis of the helicopter; and
the turbine shaft, an input shaft of the main gearbox and a rotor of the electric machine are coaxial; and/or
the anti-torque rotor is operable as a forward thruster.

12. A method of operating a hybrid helicopter power plant including: a gas turbine engine; a main gearbox drivingly connecting the gas turbine engine to a main rotor of the helicopter; an electric machine drivingly connected to the gas turbine engine; and an electric motor drivingly connected to an anti-torque device of the helicopter, the method comprising:
driving a rotatable turbine shaft of a gas turbine engine at a shaft speed;
driving, with a first axial end of the turbine shaft, an input shaft of the main gearbox at the shaft speed;
driving, with a second axial end of the turbine shaft axially opposite the first axial end of the turbine shaft, the electric machine at the shaft speed;
while the electric machine is driven at the shaft speed, operating the electric machine as a generator to generate electric energy; and
driving the electric motor drivingly connected to the anti-torque device using the electric energy that is generated by the electric machine.

13. The method as defined in claim 12, comprising using the electric energy generated by the electric machine to charge a battery onboard the helicopter, optionally wherein, after operating the electric machine as the generator:
operating the electric machine as a motor using electric energy from the battery; and
driving the main rotor of the helicopter with the electric machine via the turbine shaft and via the main gearbox.

14. The method of claim 12 or 13, wherein the turbine shaft is disposed axially between the main gearbox and the electric machine.

15. The method of any of claims 12 to 14, comprising, while driving the electric motor drivingly connected to the anti-torque device, using the anti-torque device to generate forward thrust for the helicopter; and/or
wherein:
the electric motor drivingly connected to the anti-torque device is a first electric motor drivingly connected to a first anti-torque device; and
the method includes driving a second electric motor drivingly connected to a second anti-torque device using the electric energy that is generated by the electric machine.
